# EUROPEAN PATENT APPLICATION

(11) **EP 3 118 648 A1**
(43) Date of publication of application: **18.01.2017**
(21) Application number: 15760773.0
(22) Date of filing: 24.02.2015
(51) Int. Cl.: G01S 7/524, G01S 15/18, G01V 1/00, G08G 1/16

(54) **OBJECT DETECTION APPARATUS**

(30) Priority: 11.03.2014 JP 2014048004
(71) Applicant: Panasonic Intellectual Property Management Co., Ltd., Osaka-shi, Osaka 570-6207 (JP)
(72) Inventor: SAGARA, Shogo, Osaka-shi, Osaka 540-6207 (JP); NARUSE, Hayato, Osaka-shi, Osaka 540-6207 (JP); UEDA, Akitoshi, Osaka-shi, Osaka 540-6207 (JP)
(74) Representative: Appelt, Christian W.
(86) International application number: PCT/JP2015/000896
(87) International publication number: WO 2015/136858

(57) **Abstract**

An object detection apparatus of the present invention has a wave transmitter that transmits energy waves (ultrasound waves) to a detection target region. The object detection apparatus also has a wave receiver that receives the energy waves reflected from an object existing in the detection target region and converts the received energy waves to wave reception signals made of electric signals. The object detection apparatus further has a controller that controls the wave transmitter to continuously transmit the energy waves during a predetermined wave transmission period, and a measurement part that measures a distance from the object detection apparatus to the object based on the wave reception signals output from the wave receiver. The controller is configured so as to change the wave transmission period corresponding to the distance measured by the measurement part.

## Description

### TECHNICAL FIELD

The present invention relates to an object detection apparatus. Specifically, the present invention relates to the object detection apparatus that measures a distance from the object detection apparatus to an object using waves.

### BACKGROUND ART

An ultrasonic sensor described in PTL 1 will be exemplified as a conventional example. The ultrasonic sensor described in PTL 1 transmits ultrasound waves to a space and receives the ultrasound waves (reflective waves) reflected by an object. Then the ultrasonic sensor measures a distance from the ultrasonic sensor to the object based on an elapsed time between transmission and reception of the waves. The object to be detected by the ultrasonic sensor can be in still or moving.

The ultrasonic sensor described in PTL 1 includes a piezoelectric vibrator that transmits ultrasonic waves, multiple capacitors that are connected in parallel to the piezoelectric vibrator, and multiple switches that turn on/off connection states between the piezoelectric vibrator and each of the capacitors. The ultrasonic sensor described in PTL 1 further includes an output signal processing circuit that senses a reverberation time of an output from the piezoelectric vibrator based on received signals from the piezoelectric vibrator, and a microcomputer that controls on/off of each of the switches. The microcomputer outputs on/off control signals corresponding to the reverberation time sensed by the output signal processing circuit, and changes combinations of ON/OFF of multiple switches. Capacity compensation of the piezoelectric vibrator is thus performed appropriately, and the reverberation time is adjusted to a desired length.

### Citation List

### Patent Literature

PTL 1: Unexamined Japanese Patent Publication No. 2004-343482

### SUMMARY OF THE INVENTION

To detect an object in far distance with sufficient accuracy, one idea is to increase a number of waves in each transmission (increasing a wave transmission period). However, since the reverberation time is lengthened in proportion to the wave transmission period, a detectable minimum distance is lengthened as well. Further, time required for one detection (measurement) (detection time) is lengthened as well. The detection accuracy of an object in near distance therefore decreases if only the wave transmission period is lengthened as described above.

The object detection apparatus of the present invention includes: a wave transmitter that transmits energy waves to a detection target region; and a wave receiver that receives energy waves reflected by an object existing in the detection target region and converts the received energy waves to wave reception signals made of electric signals. Further, the object detection apparatus includes a controller that controls the wave transmitter to continuously transmit the energy waves during a predetermined wave transmission period; and a measurement part that measures a distance from the sensor to the object based on the wave reception signals output from the wave receiver. The controller changes the wave transmission period corresponding to the distance measured by the measurement part.

The object detection apparatus of the present invention can detect objects in far distance and near distance respectively with sufficient accuracy.

### BRIEF DESCRIPTION OF DRAWINGS

FIG. 1 is a block diagram indicating an exemplary embodiment of an object detection apparatus of the present invention.
FIG. 2 is time chart for illustrating operation of the exemplary embodiment of the object detection apparatus of the present invention.
FIG. 3 is time chart for illustrating operation of the exemplary embodiment of the object detection apparatus of the present invention.
FIG. 4 is a flow chart for illustrating operation of the exemplary embodiment of the object detection apparatus of the present invention.
FIG. 5 is a diagram for illustrating operation of the exemplary embodiment of the object detection apparatus of the present invention.

### DESCRIPTION OF EMBODIMENT

### EXEMPLARY EMBODIMENT

An exemplary embodiment of an object detection apparatus of the present invention will be described in detail with reference to the drawings. The object detection apparatus of the present exemplary embodiment is used for detecting obstacles existing in surroundings of an automobile, for example, but the usage of the object detection apparatus is not limited to this, and can be used for other purposes. An object to be detected can be a still object, or a moving object such as automobiles or humans.

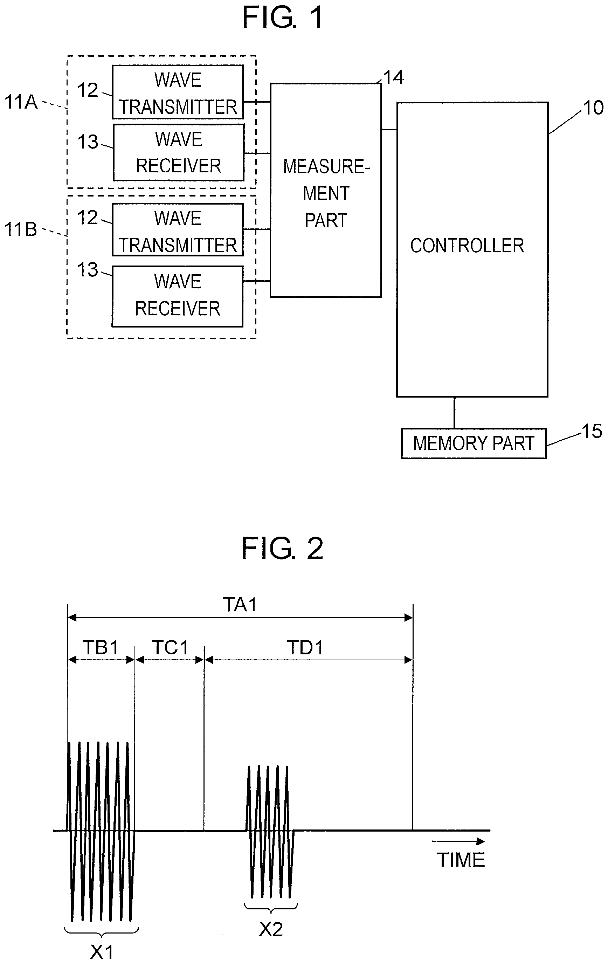

With reference to FIG. 1, the object detection apparatus of the present exemplary embodiment includes controller 10, sensor parts 11A, 11B, and measurement part 14. Preferably, the object detection apparatus of the present exemplary embodiment further includes memory part 15.

Sensor parts 11A, 11B are attached to a body of an automobile such as both right and left sides of a bumper. Each of sensor parts 11A, 11B has wave transmitter 12 and wave receiver 13.

Wave transmitter 12 preferably includes an ultrasonic transducer made of piezoelectric material, for example. Wave transmitter 12 is configured to be driven with wave transmission signals (voltage signals) supplied from measurement part 14 to transmit energy waves (ultrasonic waves) to a detection target region (surroundings of an automobile). The wave transmission signals are preferably periodical signals such as sine wave signals, rectangular wave signals, and chopping wave signals.

Wave receiver 13 preferably includes an ultrasonic transducer made of a piezoelectric material, an amplification circuit, and a wave detection circuit. Wave receiver 13 is configured to convert ultrasonic waves (reflective waves) reflected by an object existing in the detection target region into electric signals using the ultrasonic transducer, and to detect the waves using the wave detection circuit after the electric signals are amplified by the amplification circuit. Wave receiver 13 outputs electric signals (wave reception signals) detected in the wave detection circuit to measurement part 14.

Sensor parts 11A, 11B of the present exemplary embodiment use ultrasonic waves as the energy waves. However, energy waves other than the ultrasonic waves can be used, e.g., electromagnetic waves. Sensor parts 11A, 11B can share the ultrasonic transducer for wave transmitter 12 and wave receiver 13. The present exemplary embodiment employs only two sensor parts 11A, 11B, but can employ four sensor parts 11A, ..., i.e., one each for four corners of front and rear bumpers. The number of sensor parts 11A, ... is not limited to two or four, and can be one, three, or more than five.

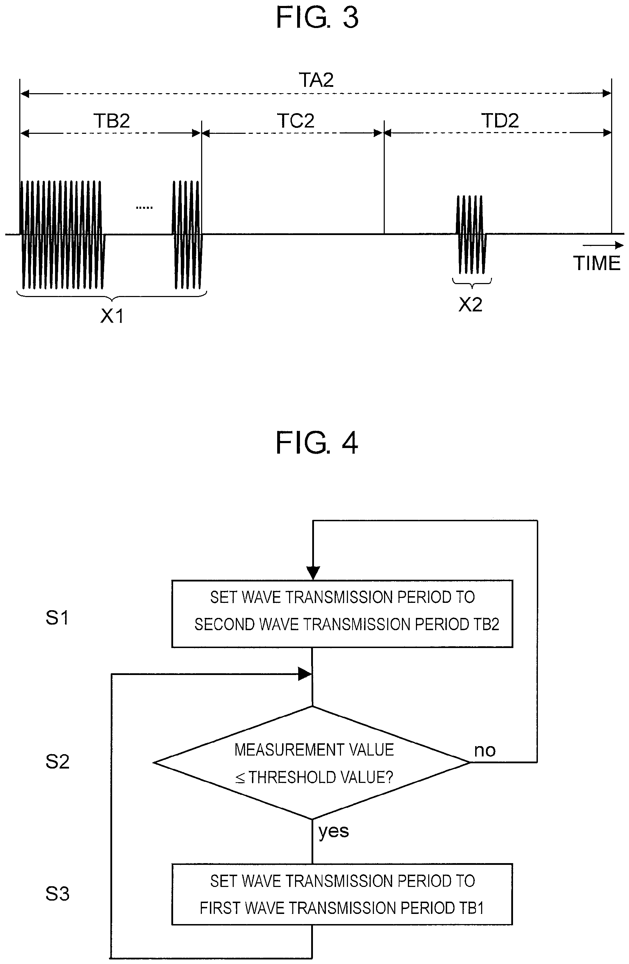

Waves of different wave transmission periods TB1, TB2 will be described with reference to FIG. 2 and FIG. 3. Transmission wave period TB1 of FIG. 2 is shorter than wave transmission period TB2 of FIG. 3.

Measurement part 14 is configured to output wave transmission signals to each of sensor parts 11A, 11B and to drive each of wave transmitters 12 of sensor parts 11A, 11B such that wave transmitters 12 transmit ultrasonic waves.

In detail, as illustrated in FIG. 2 and FIG. 3, measurement part 14 outputs wave transmission signal X1 in every predetermined measurement periods TA1, TA2 (TA1 < TA2), and drives wave transmitter 12 with wave transmission signal X1 to transmit the ultrasonic waves to a detection target space. Measurement part 14 can adjust a period (wave transmission periods TB1, TB2) where the ultrasonic waves are transmitted continuously from wave transmitter 12 by increasing or decreasing the signal length (the number of waves) of wave transmission signal X1.

For example, first wave transmission period TB1 in FIG. 2 is set to time corresponding to seven waves, i.e., wave transmission signal cycle multiplied by seven. Second wave transmission period TB2 in FIG. 3 is set to time corresponding to 85 waves, i.e., wave transmission signal cycle multiplied by 85. In FIG. 2 and FIG. 3, horizontal axis indicates time and vertical axis indicates signal level such as a voltage value.

After outputting wave transmission signal X1, measurement part 14 suspends until elapse of reverberation periods TC1, TC2 (TC1 < TC2) corresponding to wave transmission periods TB1, TB2, respectively. Measurement part 14 then acquires wave reception signal X2 output from wave receiver 13 in periods after reverberation periods TC1, TC2 elapse, i.e., wave reception periods TD1, TD2. Wave reception periods TD1, TD2 are periods obtained by respectively excluding wave transmission periods TB1, TB2 and reverberation periods TC1, TC2 from measurement cycles (measurement periods) TA1, TA2. Measurement part 14 calculates time from the output of wave transmission signal X1 to the acquisition of wave reception signal X2. That is, measurement part 14 calculates time (propagation time) required for the ultrasonic waves to roundtrip a space between sensor part 11A (also, sensor part 11B) and the object. Measurement part 14 further measures (calculates) the distance from each of sensor parts 11A, 11B to the object based on the propagation time and an advancing speed (acoustic velocity) of the ultrasonic waves, and outputs the measured distance (measured value) to controller 10. However, measurement part 14 preferably controls each of sensor parts 11A, 11B in order, so as to measure the distance from object to each of sensor parts 11A, 11B.

Memory part 15 is made of electrically rewritable non-volatile semiconductor memory such as flash memory or EEPROM. Memory part 15 stores multiple wave transmission periods TB1, TB2 and threshold values used for switching wave transmission periods TB1, TB2 as described later.

Controller 10 includes microcontroller, for example. Controller 10 is configured to perform processing such as determining the presence of near collision of an object in the detection target space or changing (switching) wave transmission periods TB1, TB2 corresponding to the distance from each of sensor parts 11A, 11B to the object, based on a measurement value supplied from measurement part 14.

Operation of the object detection apparatus of the present exemplary embodiment will now be described with reference to a flow chart of FIG. 4. First, controller 10 sets the wave transmission period of measurement part 14 to second wave transmission period TB2 which is relatively long (step S1). Measurement part 14 outputs wave transmission signal X1 continuously to wave transmitter 12 of each of sensor parts 11A, 11B during second wave transmission period TB2 which is set by controller 10. Wave transmitter 12 therefore transmits consecutive ultrasonic waves during second wave transmission period TB2 (see FIG. 3).

Measurement part 14 measures the distance from each of sensor parts 11A, 11B to the object based on the wave reception signals output from wave receiver 13 in wave reception period TD2 and outputs the measurement value to controller 10.

Controller 10 compares the measurement value input from measurement part 14 with a predetermined threshold value (predetermined value) (step S2). The threshold value is preferably set to a value for a distance that is longer than a distance determined to be in near collision of the object and is considered to have a high possibility of resulting in near collision, e.g., 0.5 meter to 0.6 meter.

Controller 10 sets the wave transmission period to second wave transmission period TB2 again (step S1) when the measurement value is larger (farther) than the threshold value (predetermined value) or when a valid measurement value is not existing (measurement is impossible due to reasons such as non-existence of the object), because wave transmission period TB2 does not have to be changed.

On the contrary, when the measurement value is equal to or less than the threshold value (predetermined value), controller 10 sets (changes) the wave transmission period to first wave transmission period TB1 which is relatively short (step S3). Measurement part 14 continuously outputs wave transmission signal X1 to wave transmitter 12 of each of sensor parts 11A, 11B during first wave transmission period TB1 which is set by controller 10.

Wave transmitter 12 therefore transmits the consecutive ultrasonic waves during first wave transmission period TB1 (see FIG. 2).

Controller 10 and measurement part 14 then perform processing of steps S1 through S3 repetitively.

Controller 10 determines that there is an object in near collision when the measurement value output from measurement part 14 is equal to or less than a predetermined limit value, and outputs alert signals to an electronic control unit mounted on an automobile, for example. The electronic control unit preferably provides a warning to a driver using either sound or light when the alert signal is received.

The percentages of receiving, in wave receiver 13, transmitted ultrasonic waves reflected from the object may differ largely between a case where the object exists in far distance and a case where the object exists in near distance. That is, reflective waves reflected from the object in far distance are less likely to be received by wave receiver 13 compared to reflective waves reflected from the object in near distance. Therefore, to improve a detection accuracy of an object existing in far distance, it is preferable to set the wave transmission period relatively longer. When the wave transmission period is set longer, a reverberation period and a wave reception period become inevitably longer, and thus time required for one measurement (measurement period) needs to be lengthened.

However, if the measurement period is lengthened, delay is likely to occur for detecting an object existing in near distance. When delay occurs in the object detection, delay may also occur for determining the presence of near collision of the object.

On the contrary, when the wave transmission period is shortened relatively, detection accuracy of the object existing in far distance may decrease although the measurement period is shortened.

The object detection apparatus of the present exemplary embodiment includes wave transmitter 12 which transmits energy waves (ultrasonic waves) to the detection target region as described above. The object detection apparatus of the present exemplary embodiment also includes wave receiver 13 which receives energy waves reflected from the object existing in the detection target region and converts the received energy waves to wave reception signals made of electric signals. Further, the object detection apparatus of the present exemplary embodiment includes controller 10 which controls wave transmitter 12 to transmit the energy waves continuously during predetermined wave transmission periods TB1, TB2, and measurement part 14 which measures the distance from object detection apparatus to the object based on wave reception signals output from wave receiver 13. Controller 10 is configured such that wave transmission periods TB1, TB2 are changed corresponding to the distance measured by measurement part 14.

In the object detection apparatus of the present exemplary embodiment, the objects in both near distance and far distance can be detected accurately because controller 10 changes wave transmission periods TB1, TB2 corresponding to the distance measured by measurement part 14.

In the object detection apparatus of the present exemplary embodiment, controller 10 preferably causes wave transmitter 12 to transmit energy waves during first wave transmission period TB1 when the distance is equal to or less than a predetermined value, i.e., a measurement value is equal to or less than a threshold value. Further, controller 10 preferably causes wave transmitter 12 to transmit the energy waves during second wave transmission period TB2 which is longer than first wave transmission period TB1 when the distance is equal to or greater than a predetermined value, i.e., a measurement value is equal to or greater than a threshold value.

While controller 10 causes wave transmitter 12 to transmit the energy waves during first wave transmission period TB1 and when the distance is longer than the predetermined range, controller 10 preferably changes the wave transmission period from first wave transmission period TB1 to second wave transmission period TB2. While controller 10 causes wave transmitter 12 to transmit the energy waves during first wave transmission period TB1 and when the distance is unmeasurable, controller 10 preferably changes the wave transmission period from first wave transmission period TB1 to second wave transmission period TB2.

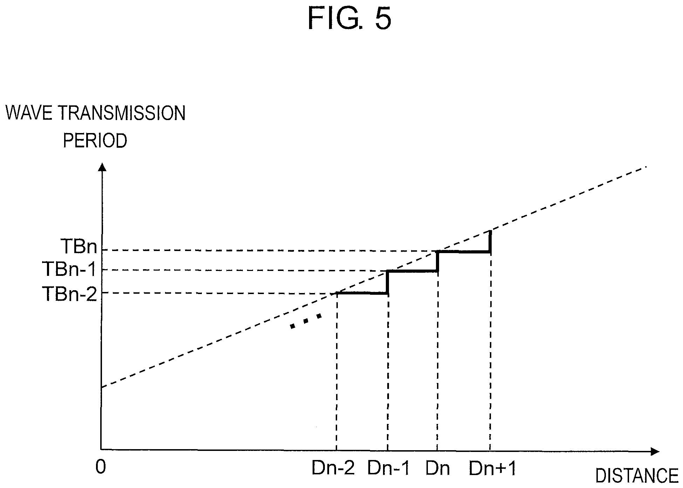

Another control method of controller 10 will be described with reference to FIG. 5.

Controller 10 can be configured so as to extend wave transmission period TB when the distance (measurement value) is increasing, and to decrease wave transmission period TB when the distance is decreasing.

For example, as illustrated in FIG. 5, controller 10 sets the wave transmission period to TBn-2 when the distance from the object detection apparatus to the object (measurement value D) is in a range of Dn-2 ≤ D < Dn-1. Controller 10 further sets the wave transmission period to TBn-1 (> TBn-2) when measurement value D is in a range of Dn-1 ≤ D < Dn, and sets the wave transmission period to TBn (> TBn-1) when measurement value D is in the range of Dn ≤ D < Dn+1.

The detection accuracy of the objects in far distance and near distance can further be improved by configuring the object detection apparatus of the present exemplary embodiment as above. Controller 10 preferably extends wave transmission period TB when the distance (measurement value) is unmeasurable.

The object detection apparatus of the present exemplary embodiment includes multiple wave transmitters 12 and multiple wave receivers 13 that respectively pair with multiple wave transmitters 12. Measurement part 14 measures distances from the object detection apparatus to the object for every multiple wave receivers 13 based on each of multiple wave reception signals output from each of multiple wave receivers 13. Controller 10 is preferably configured such that, when wave transmission period TB of one wave transmitter 12 among multiple wave transmitters 12 is changed, wave transmission period TB of at least one of other wave transmitters 12 among multiple wave transmitters 12 is changed correspondingly.

Controller 10 can, for example, change wave transmission periods TB of two sensor parts 11A, 11B attached to a front bumper in conjunction with each other, and change wave transmission periods TB of two sensor parts attached to a rear bumper in conjunction with each other. Since two sensor parts attached to the same bumper are likely to detect the same object, the detection accuracy of the object can be improved when wave transmission periods of the two sensor parts are changed in conjunction with each other.

However, controller 10 is preferably configured such that wave transmission periods of all multiple wave transmitters 12 are lengthened relatively when all multiple distances measured by measurement part 14 based on multiple wave reception signals are unmeasurable, or when all multiple distances are larger than the predetermined value.

### REFERENCE MARKS IN THE DRAWINGS

- 10:: controller
- 11A, 11B:: sensor part
- 12:: wave transmitter
- 13:: wave receiver
- 14:: measurement part

## Claims

1. An object detection apparatus comprising:
a wave transmitter that transmits an energy wave to a detection target region;
a wave receiver that receives the energy wave reflected from an object existing in the detection target region and converts the received energy wave to a wave reception signal made of an electric signal;
a controller that causes the wave transmitter to continuously transmit the energy wave during a wave transmission period which is predetermined; and
a measurement part that measures a distance from the object detection apparatus to the object based on the wave reception signal output from the wave receiver,
wherein the controller changes the wave transmission period corresponding to the distance measured by the measurement part.

2. The object detection apparatus according to claim 1, wherein the controller
causes the wave transmitter to transmit the energy wave during a first wave transmission period when the distance is equal to or less than a predetermined value, and
causes the wave transmitter to transmit the energy wave during a second wave transmission period that is longer than the first wave transmission period when the distance is larger than the predetermined value.

3. The object detection apparatus according to claim 2, wherein
while the controller causes the wave transmitter to transmit the energy wave during the first wave transmission period, and
when the distance is longer than the predetermined value or when the distance is unmeasurable,
the controller changes the wave transmission period from the first wave transmission period to the second wave transmission period.

4. The object detection apparatus according to claim 1, wherein
the controller extends the wave transmission period when the distance is increasing, and shortens the wave transmission period when the distance is decreasing.

5. The object detection apparatus according to claim 4, wherein
the controller extends the wave transmission period when the distance is unmeasurable.

6. The object detection apparatus according to any one of claims 1, 2, and 4, comprising:
a plurality of the wave transmitters; and
a plurality of the wave receivers that respectively pairs with the plurality of the wave transmitters,
wherein the measurement part measures a plurality of distances from the object detection apparatus to the object for each of the plurality of the wave receivers based on a plurality of the wave reception signals output respectively from the plurality of the wave receivers, and
when a wave transmission period of one wave transmitter among the plurality of the wave transmitters is changed, the controller correspondingly changes a wave transmission period of at least one of the other wave transmitters among the plurality of the wave transmitters.

7. The object detection apparatus according to claim 6, wherein
when all of the plurality of distances measured by the measurement part based on the plurality of the wave reception signals are unmeasurable or
when all of the plurality of distances are larger than the predetermined value,
the controller relatively lengthens the wave transmission periods of all of the plurality of the wave transmitters.
